# EUROPEAN PATENT SPECIFICATION

(11) **EP 2 683 468 B1**
(45) Date of publication and mention of the grant of the patent: **19.07.2017**
(21) Application number: 12711446.0
(22) Date of filing: 21.02.2012
(51) Int. Cl.: F02M 26/35, B01D 53/94, F01N 3/035, F01N 3/20, F01N 3/10, B01J 29/76, B01J 23/63, B01J 23/42, B01J 23/44, B01J 37/02

(54) **EXHAUST SYSTEM HAVING AMMONIA SLIP CATALYST IN EGR CIRCUIT**
ABGASSYSTEM MIT EINEM AMMONIAKSCHLUPFKATALYSATOR IN EINER AGR-SCHALTUNG
SYSTÈME D'ÉCHAPPEMENT CONTENANT UN CATALYSEUR DE DÉPLACEMENT D'AMMONIAC DANS UN CIRCUIT EGR

(30) Priority: 07.03.2011 US 201161449936 P
(43) Date of publication of application: 15.01.2014
(73) Proprietor: Johnson Matthey Public Limited Company, London EC4A 4AB (GB)
(72) Inventor: CHANDLER, Guy, Richard, Little Eversden Cambridge CB23 1HB (GB); COLLINS, Neil, Robert, Royston Hertfordshire SG8 0QL (GB); PHILLIPS, Paul, Richard, Royston Hertfordshire SG8 5YR (GB)
(74) Representative: Turberville, Simon
(86) International application number: PCT/IB2012/000303
(87) International publication number: WO 2012/120347

(56) References cited:
- WO-A1-2008/103230
- WO-A1-2012/059180
- DE-A1-102009 014 361
- JP-A- 2008 291 671
- KR-A- 20100 064 931
- US-A1- 2009 193 794
- US-A1- 2011 146 269

## Description

### FIELD OF THE INVENTION

The present invention relates to an exhaust system for a vehicular lean burn internal combustion engine that emits oxides of nitrogen and particulate matter.

### BACKGROUND OF THE INVENTION

One of the most burdensome components of vehicular exhaust gas are the oxides of nitrogen (NOₓ), which include nitric oxide (NO), nitrogen dioxide (NO₂) and nitrous oxide (N₂O). The production of NOₓ is particularly problematic for lean burn engines, such as diesel engines. To mitigate the environmental impact of NOₓ in exhaust gas, it is desirable to eliminate these undesirable components, preferably by a process that does not generate other noxious or toxic substances.

One method for converting NOₓ in a diesel exhaust gas into more benign substances is commonly referred to as Selective Catalytic Reduction (SCR). An SCR process involves the conversion of NOₓ, in the presence of a catalyst and with the aid of a reducing agent, into elemental nitrogen (N₂) and water. In an SCR process, a gaseous reductant, typically anhydrous ammonia, aqueous ammonia, or urea, is added to an exhaust gas stream prior to contacting the catalyst. The reductant is absorbed onto a catalyst and the NOₓ reduction reaction takes place as the gases pass through or over the catalyzed substrate. However, to maximize the conversion efficiency, it is often necessary to add more than a stoichiometric amount of ammonia to the gas stream. This excess of ammonia would be detrimental to the environment if released into the atmosphere, and thus should be eliminated. In conventional exhaust systems, an ammonia oxidation catalyst (also known as an ammonia slip catalyst or "ASC") is installed downstream of the SCR catalyst for this purpose.

To reduce the amount of space required for an exhaust system, it is often desirable to design individual exhaust components to perform more than one function. For example, applying an SCR catalyst to a filter substrate (SCRF™) serves to reduce the overall size of an exhaust treatment system by allowing one substrate to serve two functions, namely catalytic conversion of NOₓ by the SCR catalyst and removal of soot by the filter. Conventionally, these two functions were separately performed by an SCR and a catalytic soot filter (CSF), respectively.

Exhaust gas recirculation (EGR) is a method for reducing NOₓ emissions from an engine by returning a portion of an engine's exhaust gas to the engine combustion chambers via the air intake. EGR works by lowering the oxygen concentration in the combustion chamber, thereby decreasing the peak temperature of the fuel combustion flame as well as through heat absorption. EGR is not a new technology - it has been used since the mid-1970s in gasoline fueled passenger car engines. Following the gasoline application, EGR was also introduced to diesel passenger cars and - from the early 2000s - to heavy-duty diesel engines.

Generally, there are two exhaust system arrangements comprising EGR: (i) high pressure loop EGR, in which the exhaust gas is recirculated from upstream of a turbocharger to ensure that exhaust gas will flow from the former to the latter; and (ii) low pressure loop EGR (also called long loop EGR), where exhaust gas is often recirculated from downstream of a particulate filter, allowing all the exhaust gas to be utilised in the turbo. Exhaust gas pressure downstream of the filter is generally lower than at the intake manifold, allowing exhaust gas to flow from the former to the latter location.

In use, particularly during cold start in a vehicle configured to meet the MVEG-A drive cycle, an EGR valve is set to recirculate approximately 50% of the exhaust gas to the engine. Exhaust gas emitted from the engine during EGR has lower oxygen content but no higher NOₓ content than exhaust gas recirculated from the exhaust system to the engine.

While SCRF™ systems offer tremendous advantage for improved NOₓ conversion compared to conventional, separate CSF + SCR catalyst systems, the maximum advantage is gained by using so-called low pressure EGR, whereby the EGR is taken after the SCRF™. However, a problem can be encountered that ammonia slips from the SCRF™ (due to non-ideal gas or NH₃, or NH₃-source such as urea, or due to changes in operating conditions that results in release of stored ammonia from the SCRF™). Ammonia or NH₃-source species then enter the EGR system. These species can cause damage to the EGR system. Ammonia slip catalysts have been used to prevent NH₃ entering the atmosphere (i.e., via the tailpipe of an automobile), but have not been used in the EGR system itself. The EGR-ASC should have high selectivity to form N₂ and have low backpressure.

KR 10-2010-0064931 describes an exhaust gas recirculation (EGR) system comprises an intake line, an exhaust line, a low pressure EGR line, a purification device, an EGR cooler, an EGR filter, and an EGR valve. The low pressure EGR line recirculates exhaust gas passing through the exhaust line to the intake line. The purification device purifies HC/CO of harmful gas included in exhaust gas recirculated to the intake line. The EGR cooler and the EGR filter are installed in the low pressure EGR line.

US 2009/193794 describes an exhaust system having an exhaust passageway, a reduction catalyst located within the exhaust passageway, and a particulate filter located within the exhaust passageway upstream of the reduction catalyst. The exhaust system may also have an oxidation catalyst located within the exhaust passageway upstream of the reduction catalyst to provide a desired ratio of NO:NO₂ to the reduction catalyst, and an exhaust gas recirculation loop. The exhaust gas recirculation loop may be situated to receive exhaust from the exhaust passageway at a location upstream of the oxidation catalyst and downstream of the particulate filter.

DE 102009014361 describes an exhaust-gas treatment device for a vehicle, having an SCR catalytic converter for reducing nitrogen oxides in the exhaust gas of an internal combustion engine. At least one turbocharger is connected in front of the SCR catalytic converter. A reducing agent can be introduced into the exhaust gas by means of a metering device at an introduction point which is preferably arranged upstream of a turbine of the at least one turbocharger. An oxidation catalytic converter is arranged upstream of the introduction point.

### SUMMARY OF THE INVENTION

The invention includes an exhaust system for a vehicular lean burn internal combustion engine that emits oxides of nitrogen (NOₓ) and particulate matter (PM), and a lean-burn internal combustion engine containing the exhaust system. The system comprises a NOₓ reduction catalyst for reducing NOₓ in the presence of a nitrogenous reductant, means for introducing the nitrogenous reductant into a flowing exhaust gas, a filter for removing PM from exhaust gas flowing in the exhaust system and a low pressure exhaust gas recirculation (EGR) circuit for connecting the exhaust system downstream of the filter to an air intake of the engine, wherein the EGR circuit comprises an ammonia oxidation catalyst, and wherein the NOₓ reduction catalyst is located on the filter. The ammonia oxidation catalyst serves to oxidize most, if not all, of the ammonia in the exhaust gas recirculation loop prior to exhaust gas entering the engine. Thus, the ammonia oxidation catalyst reduces the concentration of ammonia slip from the NOₓ reduction reaction, the release of ammonia from the catalyst surface during rapid temperature increases, or from the use of a stoichiometric excess of reductant.

### BRIEF DESCRIPTION OF THE DRAWING

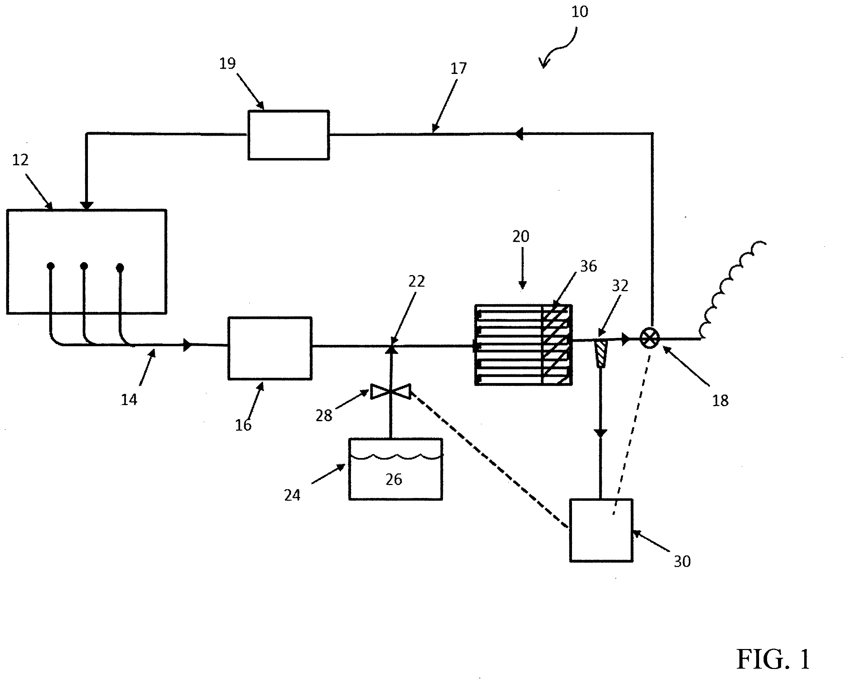

FIG. 1 is a schematic flow diagram of one embodiment of the invention.

### DETAILED DESCRIPTION OF THE INVENTION

The invention is an exhaust system that comprises a NOₓ reduction catalyst for reducing NOₓ in the presence of a nitrogenous reductant, means for introducing the nitrogenous reductant into a flowing exhaust gas, a filter for removing PM from exhaust gas flowing in the exhaust system and a low pressure exhaust gas recirculation (EGR) circuit for connecting the exhaust system downstream of the filter to an air intake of the engine. The EGR circuit comprises an ammonia oxidation catalyst.

Suitable NOₓ reduction catalysts known in the art include selective catalytic reduction (SCR) catalysts, which are particularly useful for selectively catalyzing catalyzes the reduction of NOₓ using a nitrogenous reductant. Suitable selective catalytic reduction catalysts include transition metal promoted molecular sieves such as aluminosilicate zeolites and silicoaluminophosphates. Suitable transition metal promoters include Cr, Ce, Mn, Fe, Co, Ni and Cu and mixtures of any two or more thereof. Preferred molecular sieve catalysts include CuCHA, such as Cu-SAPO-34, Cu-SSZ-13, and Fe-Beta zeolite, where either the Fe is present in the framework of the molecular sieve structure and/or otherwise associated e.g. ion-exchanged with the framework structure. Fe-WOₓ-ZrO₂ can be used as an active non-molecular sieve SCR catalyst.

The nitrogenous reductant for use in the system can be ammonia *per se,* hydrazine or an ammonia precursor selected from the group consisting of urea ((NH₂)₂CO), ammonium carbonate, ammonium carbamate, ammonium hydrogen carbonate and ammonium formate.

The nitrogenous reductant is added to the flowing exhaust gas by any suitable means for introducing the reductant into the exhaust gas. Suitable means include an injector, sprayer, or feeder, and is preferably an injector. Such means are well known in the art.

The system may comprise means for controlling the introduction of nitrogenous reductant into the exhaust gas in order to reduce NOₓ therein. In one embodiment, the control means comprises an electronic control unit, optionally an engine control unit. Furthermore, the control means may comprise a NOₓ sensor located downstream of the NOₓ reduction catalyst.

The system also comprises a filter, preferably a wall-flow filter.

The NOₓ reduction catalyst is located on the filter, preferably in the form of a selective catalytic reduction filter (known as an SCRF™). Where the filter is a wall-flow filter, the NOₓ reduction catalyst can be formulated as a washcoat that permeates the walls of the filter. This can be done, for example, by milling the catalyst to an average particle size of ≤ 5µm. In this embodiment the means for introducing reductant into a flowing exhaust gas is suitably located upstream of the filter.

Preferably, a second ammonia oxidation catalyst may be disposed downstream of the NOₓ reduction catalyst and upstream of the EGR, relative to the direction of exhaust gas flow through the system. Most preferably, the second ammonia oxidation catalyst is located at the rear of the selective catalytic reduction filter such that the filter comprises a selective catalytic reduction catalyst throughout and a rear zone, relative the direction of exhaust gas flow through the system, that is coated with the second ammonia oxidation catalyst. The second ammonia oxidation catalyst preferably comprises platinum and/or palladium on a metal oxide such as alumina.

In a preferred embodiment, an NO oxidation catalyst for oxidizing NO to nitrogen dioxide is located upstream of the filter and/or the NOₓ reduction catalyst. The NO oxidation catalyst preferably comprises a platinum group metal, most preferably platinum.

The system also comprises a low pressure exhaust gas recirculation (EGR) circuit for connecting the exhaust system downstream of the filter to an air intake of the engine, wherein the EGR circuit comprises an ammonia oxidation catalyst (also known as an ammonia slip catalyst or "ASC").

Preferably, the ammonia oxidation catalyst material should be selected to favor the oxidation of ammonia instead of the formation of NOₓ or N₂O. Preferred catalyst materials include platinum, palladium, or a combination thereof, with platinum or a platinum/palladium combination being preferred. Preferably, the ammonia oxidation catalyst comprises platinum and/or palladium supported on a metal oxide. Preferably, the catalyst is disposed on a high surface area support, including but not limited to alumina.

In certain embodiments, the ammonia oxidation catalyst is applied to a substrate, preferably substrates that are designed to provide large contact surface with minimal backpressure. Preferably, the ammonia oxidation catalyst is located in or on a flow-through monolith substrate, such as flow-through metallic or cordierite honeycombs. For example, a preferred flow-through monolith substrate has between 4 to 47 channels per square centimetre (25 and about 300 cells per square inch (cpsi)) to ensure low backpressure. Achieving low backpressure is particularly important to minimize the ammonia oxidation catalyst's effect on the low-pressure EGR performance.

An ammonia oxidation catalyst can be applied to the flow-through monolith substrate as a washcoat, preferably to achieve a loading of 18.3 to 140.4 g/L (0.3 to 2.3 g/in³). To provide further NOₓ conversion, the front part of the substrate can be coated with just SCR coating, and the rear coated with SCR and an ammonia oxidation catalyst composition such as Pt or Pt/Pd on an alumina support.

According to a further aspect, the invention provides a lean-burn internal combustion engine comprising an exhaust system according to the invention. The lean-burn internal combustion engine can be a lean-burn gasoline or a diesel engine, but the engine may also run on alternative fuels such as liquid petroleum gas, natural gas or comprise bio-fuels or gas -to-liquid products. In a particular embodiment, the lean-burn internal combustion engine is a compression ignition engine powered e.g. by diesel fuel.

In order that the invention may be more fully understood, the following Examples are provided by way of illustration only and with reference to the accompanying drawing.

### EXAMPLES

Figure 1 is a schematic diagram of a vehicular lean-burn internal combustion engine comprising an exhaust system according to a first embodiment of the invention featuring an ammonia oxidation catalyst component disposed in an exhaust gas recirculation circuit.

Referring to Figure 1, there is shown a diesel engine 12 comprising an exhaust system 10 according to the present invention. The exhaust system comprises an exhaust line 14 wherein aftertreatment components are disposed in series. The NO oxidation catalyst 16 comprises a ceramic flow-through substrate monolith coated with a NO oxidation catalyst composition comprising a platinum rich combination of platinum and palladium supported on an alumina-based high surface area support material.

A ceramic wall-flow filter 20 comprising a washcoat of Cu-SSZ-13 selective catalytic reduction catalyst is disposed downstream of NO oxidation catalyst 16. An optional ammonia oxidation clean-up or slip catalyst 36 may be coated on a downstream end of the SCR catalyst monolith substrate. Means (injector 22) is provided for introducing nitrogenous reductant fluid (urea 26) from reservoir 24 into exhaust gas carried in the exhaust line 14. Injector 22 is controlled using valve 28, which valve is in turn controlled by electronic control unit 30 (valve control represented by dotted line). Electronic control unit 30 receives closed loop feedback control input from a NOₓ sensor 32 located downstream of the SCR catalyst.

Low pressure exhaust gas recirculation circuit 17 comprises an exhaust gas recirculation valve 18 also controlled by the electronic control unit 30. Disposed within the exhaust gas recirculation circuit, ASC 19 comprises a metallic flow-through substrate monolith coated with a Pt or Pt/Pd composition supported on alumina. The ASC 19 serves to oxidize ammonia that would otherwise enter the engine.

## Claims

1. An exhaust system for a vehicular lean burn internal combustion engine that emits oxides of nitrogen (NOₓ) and particulate matter (PM), the system comprising a NOₓ reduction catalyst for reducing NOₓ in the presence of a nitrogenous reductant, means for introducing the nitrogenous reductant into a flowing exhaust gas, a filter for removing PM from exhaust gas flowing in the exhaust system and a low pressure exhaust gas recirculation (EGR) circuit for connecting the exhaust system downstream of the filter to an air intake of the engine, wherein the EGR circuit comprises an ammonia oxidation catalyst, and wherein the NOₓ reduction catalyst is located on the filter.

2. The exhaust system of claim 1, wherein the NOₓ reduction catalyst is a selective catalytic reduction catalyst comprising a transition metal promoted molecular sieve.

3. The exhaust system of claim 1 or claim 2, wherein the nitrogenous reductant is ammonia, hydrazine or an ammonia precursor selected from the group consisting of urea ((NH₂)₂CO), ammonium carbonate, ammonium carbamate, ammonium hydrogen carbonate and ammonium formate.

4. The exhaust system of any one of the preceding claims, wherein the ammonia oxidation catalyst comprises platinum and/or palladium supported on a metal oxide.

5. The exhaust system of claim 4, wherein the ammonia oxidation catalyst is located in or on a flow-through monolith substrate.

6. The exhaust system of claim 5, wherein the substrate is metallic.

7. The exhaust system of claim 5 or claim 6, wherein the substrate comprises 4 to 47 channels per square centimetre (25 to 300 parallel channels per square inch) of cross-sectional area.

8. The exhaust system of any one of claims 5 to 7, wherein the substrate is loaded with 18.3 to 140.4 g/L (0.3 to 2.3 g/in³) of an ammonia oxidation catalyst.

9. The exhaust system of any one of claims 5 to 8, wherein the substrate has a front and a rear, relative to the direction of gas flow through the substrate, and wherein the front is loaded with a selective catalytic reduction (SCR) catalyst and the rear is loaded with a SCR and an ammonia oxidation catalyst composition.

10. The exhaust system of any one of the preceding claims, wherein the NOₓ reduction catalyst located on the filter is a selective catalytic reduction (SCR) catalyst located on the filter (SCRF™), and wherein the exhaust system further comprises a second ammonia oxidation catalyst disposed downstream of the selective catalytic reduction catalyst located on the filter (SCRF™) and upstream of the EGR, relative to the direction of exhaust gas flow through the system.

11. A lean-burn internal combustion engine comprising an exhaust system according to any preceding claim.

## Patentansprüche

1. Abgassystem für einen Fahrzeugmagerverbrennungsmotor, der Stickoxide (NOx) und Schwebstoffe (PM) ausstößt, wobei das System einen NOx-Reduktionskatalysator zum Reduzieren von NOx in Gegenwart eines stickstoffhaltigen Reduktionsmittels, Mittel zum Einbringen des stickstoffhaltigen Reduktionsmittels in ein strömendes Abgas, einen Filter zum Entfernen von PM aus Abgas, das in dem Abgassystem strömt, und einen Niederdruck-Abgasrückführungskreislauf (Niederdruck-AGR-Kreislauf) zum Verbinden des Abgassystems stromabwärts von dem Filter mit einer Luftansaugung des Motors umfasst, wobei der AGR-Kreislauf einen Ammoniak-Oxidationskatalysator umfasst und wobei der NOx-Reduktionskatalysator sich auf dem Filter befindet.

2. Abgassystem nach Anspruch 1, wobei der NOx-Reduktionskatalysator ein selektiver katalytischer Reduktionskatalysator ist, der ein Übergangsmetallpromotor-Molekularsieb umfasst.

3. Abgassystem nach Anspruch 1 oder 2, wobei das stickstoffhaltige Reduktionsmittel Ammoniak, Hydrazin oder ein Ammoniakvorläufer ist, der aus der Gruppe bestehend aus Harnstoff ((NH2)2CO), Ammoniumcarbonat, Ammoniumcarbamat, Ammoniumhydrogencarbonat und Ammoniumformiat ausgewählt ist.

4. Abgassystem nach einem der vorhergehenden Ansprüche, wobei der Ammoniak-Oxidationskatalysator Platin und/oder Palladium umfasst, das auf einem Metalloxid geträgert ist.

5. Abgassystem nach Anspruch 4, wobei der Ammoniak-Oxidationskatalysator sich in oder auf einem Durchfluss-Monolithsubstrat befindet.

6. Abgassystem nach Anspruch 5, wobei das Substrat metallisch ist.

7. Abgassystem nach Anspruch 5 oder 6, wobei das Substrat 4 bis 47 Kanäle pro Quadratzentimeter (25 bis 300 parallele Kanäle pro Quadratzoll) einer Querschnittsfläche umfasst.

8. Abgassystem nach einem der Ansprüche 5 bis 7, wobei das Substrat mit 18,3 bis 140,4 g/L (0,3 bis 2,3 g/in³) eines Ammoniak-Oxidationskatalysators beladen ist.

9. Abgassystem nach einem der Ansprüche 5 bis 8, wobei das Substrat eine Vorderseite und eine Rückseite in Bezug auf die Richtung der Gasströmung durch das Substrat aufweist und wobei die Vorderseite mit einem selektiven katalytischen Reduktionskatalysator (SKR-Katalysator) beladen ist und die Rückseite mit einer SKR- und einer Ammoniak-Oxidationskatalysator-Zusammensetzung beladen ist.

10. Abgassystem nach einem der vorhergehenden Ansprüche, wobei der NOx-Reduktionskatalysator, der sich auf dem Filter befindet, ein selektiver katalytischer Reduktionskatalysator (SKR-Katalysator), der sich auf dem Filter befindet, ist (SCRF™), und wobei das Abgassystem weiterhin einen zweiten Ammoniak-Oxidationskatalysator umfasst, der stromabwärts von dem selektiven katalytischen Reduktionskatalysator, der sich auf dem Filter befindet (SCRF™) und stromaufwärts von dem EGR in Bezug auf die Richtung der Abgasströmung durch das System angeordnet ist.

11. Magerverbrennungsmotor, der ein Abgassystem nach einem vorhergehenden Anspruch umfasst.

## Revendications

1. Système d'échappement pour un moteur de véhicule à combustion interne à mélange pauvre qui émet des oxydes d'azote (NOx) et de la matière particulaire (PM, « Particulate matter »), le système comprenant un catalyseur de réduction des NOx pour réduire les NOx en présence d'un réducteur azoté, des moyens pour introduire le réducteur azoté dans un gaz d'échappement qui s'écoule, un filtre pour séparer la PM du gaz d'échappement qui s'écoule dans le système d'échappement et un circuit de recyclage de gaz d'échappement (EGR, « Exhaust gas recirculation ») à basse pression pour connecter le système d'échappement en aval du filtre à une admission d'air du moteur, dans lequel le circuit d'EGR comprend un catalyseur d'oxydation d'ammoniac, et dans lequel le catalyseur de réduction des NOx est situé sur le filtre.

2. Système d'échappement selon la revendication 1, dans lequel le catalyseur de réduction des NOx est un catalyseur de réduction catalytique sélective comprenant un tamis moléculaire activé par un métal de transition.

3. Système d'échappement selon la revendication 1 ou la revendication 2, dans lequel le réducteur azoté est de l'ammoniac, de l'hydrazine ou un précurseur d'ammoniac choisi dans le groupe constitué par l'urée ((NH2)2CO), le carbonate d'ammonium, le carbamate d'ammonium, l'hydrogénocarbonate d'ammonium et le formiate d'ammonium.

4. Système d'échappement selon l'une quelconque des revendications précédentes, dans lequel le catalyseur d'oxydation d'ammoniac comprend du platine et/ou du palladium supporté sur un oxyde métallique.

5. Système d'échappement selon la revendication 4, dans lequel le catalyseur d'oxydation d'ammoniac est situé à l'intérieur ou à la surface d'un substrat monolithe à flux continu.

6. Système d'échappement selon la revendication 5, dans lequel le substrat est métallique.

7. Système d'échappement selon la revendication 5 ou la revendication 6, dans lequel le substrat comprend 4 à 47 canaux par centimètre carré (25 à 300 canaux parallèles par pouce carré) de section transversale.

8. Système d'échappement selon l'une quelconque des revendications 5 à 7, dans lequel le substrat est chargé de 18,3 à 140,4 g/L (0,3 à 2,3 g/in³) d'un catalyseur d'oxydation d'ammoniac.

9. Système d'échappement selon l'une quelconque des revendications 5 à 8, dans lequel le substrat a un avant et un arrière, par rapport au sens de l'écoulement de gaz à travers le substrat, et dans lequel l'avant est chargé d'un catalyseur de réduction catalytique sélective (SCR, « Selective catalytic reduction ») et l'arrière est chargé d'une composition de catalyseurs de SCR et d'oxydation d'ammoniac.

10. Système d'échappement selon l'une quelconque des revendications précédentes, le catalyseur de réduction des NOx situé sur le filtre étant un catalyseur de réduction catalytique sélective (SCR) situé sur le filtre (SCRF™), et le système d'échappement comprenant en outre un second catalyseur d'oxydation d'ammoniac disposé en aval du catalyseur de réduction catalytique sélective situé sur le filtre (SCRF™) et en amont de l'EGR, par rapport au sens de l'écoulement de gaz d'échappement à travers le système.

11. Moteur à combustion interne à mélange pauvre comprenant un système d'échappement selon l'une quelconque des revendications précédentes.
